# EUROPEAN PATENT APPLICATION

(11) **EP 4 615 094 A1**
(43) Date of publication of application: **10.09.2025**
(21) Application number: 25161599.3
(22) Date of filing: 04.03.2025
(51) Int. Cl.: H04W 72/04, H04L 5/00, H04W 72/0453, H04W 84/12

(54) **WIDE BANDWIDTH TRANSMISSION WITH DYNAMIC SUBCHANNEL AND SUBBAND OPERATIONS IN WIRELESS COMMUNICATIONS**

(30) Priority: 05.03.2024 US 202463561384 P; 03.03.2025 US 202519068032
(71) Applicant: MediaTek Inc., Hsinchu City, 30078 (TW)
(72) Inventor: LU, Kai Ying, San Jose (US); LAI, Yi-Hsiang, Hsinchu City (TW); CHANG, Cheng-Yi, 30078 Hsinchu City (TW); HSIEH, Hung-Tao, Hsinchu City (TW); YEE, James Chih-Shi, San Jose (US)
(74) Representative: Hoefer & Partner Patentanwälte mbB

(57) **Abstract**

Techniques pertaining to wide bandwidth transmission with dynamic subchannel/subband operations in wireless communications are described. An apparatus, as a station, STA, receives an initial control frame, ICF, from an access point, AP, wherein the ICF allocates dynamic subchannel/subband operation, DSO, subband resources to DSO STAs for transmitting ICF response frames (810). In response to receiving the ICF, the apparatus transmits an ICF response frame to the AP, wherein the ICF response frame is transmitted according to a DSO subband resource allocated to the STA (820).

## Description

### CROSS REFERENCE TO RELATED PATENT APPLICATION

The present disclosure is part of a non-provisional patent application claiming the priority benefit of U.S. Provisional Patent Application No. 63/561384, filed 5 March 2024, the contents of which herein is incorporated by reference in their entirety.

### TECHNICAL FIELD

The present disclosure is generally related to wireless communications and, more particularly, to wide bandwidth transmission with dynamic subchannel/subband operations in wireless communications.

### BACKGROUND

Unless otherwise indicated herein, approaches described in this section are not prior art to the claims listed below and are not admitted as prior art by inclusion in this section.

In wireless communications such as Wi-Fi (or WiFi) and wireless local area networks (WLANs) under the Institute of Electrical and Electronics Engineers (IEEE) 802.11 standards, with more unlicensed spectrum approved by regulatory authorities, access points (APs) may support up to 320 MHz channel bandwidth. However, most non-AP stations (STAs), such as clients, may support only 20MHz/40MHz/80 MHz due to cost consideration while very few high-end clients may support 160MHz/320MHz bandwidth. The current Wi-Fi technology requires all clients associated with an AP to monitor a primary 20MHz channel of the operating bandwidth to detect the preamble of a packet over the medium and all transmissions is to at least include the primary 20MHz channel.

For a wideband AP (e.g., 160MHz or 320MHz), when multi-user transmission is intended for non-AP STAs of mixed types (e.g., high-efficiency (HE), extremely-high-throughput (EHT) and/or ultra-high-reliability (UHR) devices) and/or different bandwidth capability, if at least one client supports wide bandwidth such as 160MHz or 320MHz, the AP may utilize multi-user orthogonal frequency-division multiple access (OFDMA) to schedule resource units (RUs) to the wideband STA with an operating bandwidth of 160MHz in a secondary 80MHz subband of the 160MHz operating bandwidth or to the wideband STA with an operating bandwidth of 320MHz in a secondary 160MHz subband of the 320MHz operating bandwidth. However, if no such wideband client exists, large portions of the operating bandwidth would be underutilized due to the requirement that any transmissions must include the primary 20MHz channel, leading to poor spectral efficiency.

The next generation of wireless technology aims to address such issue of underutilization of spectrum resources by allowing narrowband clients to use different portions of the operating bandwidth which may not include the primary 20MHz channel within a transmission opportunity (TXOP), e.g., in an AP-obtained TXOP with a bandwidth of 80MHz/160MHz/320MHz. The associated non-AP STAs do not need to support wide bandwidth but may support dynamic subchannel/subband switch indicated by its AP. However, there might be undetected overlapping basic service set (OBSS) interference in one or more subchannels/subbands due to no channel status on such subchannel(s)/subband(s) before the switching. That is, how can the AP efficiently allocate RUs for the STAs which are switched by the AP to the subchannel(s)/subband(s) is one technical issue that needs to be addressed. Moreover, how to protect non-primary subband transmission is another technical issue that also needs to be addressed. Therefore, there is a need for wide bandwidth transmission with dynamic subchannel/subband operations in wireless communications.

### SUMMARY

The following summary is illustrative only and is not intended to be limiting in any way. That is, the following summary is provided to introduce concepts, highlights, benefits, and advantages of the novel and non-obvious techniques described herein. Select implementations are further described below in the detailed description. Thus, the following summary is not intended to identify essential features of the claimed subject matter, nor is it intended for use in determining the scope of the claimed subject matter.

An objective of the present disclosure is to provide schemes, concepts, designs, techniques, methods, and apparatuses pertaining to wide bandwidth transmission with dynamic subchannel/subband operations in wireless communications. It is believed that implementation of one or more schemes proposed herein may address or otherwise alleviate the aforementioned issue(s). Methods according to the invention are defined in the independent claims. The dependent claims define preferred embodiment thereof.

In one aspect, a method may involve a STA receiving an initial control frame (ICF) from an AP, wherein the ICF allocates dynamic subchannel/subband operation (DSO) subband resources to DSO STAs for transmitting ICF response frames. The method may also involve the STA transmitting an ICF response frame to the AP responsive to receiving the ICF, wherein the ICF response frame is transmitted according to a DSO subband resource allocated to the STA.

In another aspect, a method may involve an AP transmitting an initial control frame (ICF) to a STA, wherein the ICF allocates dynamic subchannel/subband operation (DSO) subband resources to DSO STAs for transmitting ICF response frames. The method may also involve the AP receiving an ICF response frame from the STA, wherein the ICF response frame is transmitted according to a DSO subband resource allocated to the STA.

It is noteworthy that, although the description provided herein may be in the context of certain radio access technologies, networks and network topologies such as Wi-Fi/WiFi, the proposed concepts, schemes and any variation(s)/derivative(s) thereof may be implemented in, for and by other types of radio access technologies, networks and network topologies such as, for example and without limitation, Bluetooth, ZigBee, 5th Generation (5G)/New Radio (NR), Long-Term Evolution (LTE), LTE-Advanced, LTE-Advanced Pro, Internet-of-Things (IoT), Industrial IoT (IIoT) and narrowband IoT (NB-IoT). Thus, the scope of the present disclosure is not limited to the examples described herein.

### BRIEF DESCRIPTION OF THE DRAWINGS

The accompanying drawings are included to provide a further understanding of the disclosure and are incorporated in and constitute a part of the present disclosure. The drawings illustrate implementations of the disclosure and, together with the description, serve to explain the principles of the disclosure. It is appreciable that the drawings are not necessarily in scale as some components may be shown to be out of proportion than the size in actual implementation to clearly illustrate the concept of the present disclosure.
FIG. 1 is a diagram of an example network environment in which various solutions and schemes in accordance with the present disclosure may be implemented.
FIG. 2 is a diagram of an example scenario under a proposed scheme in accordance with the present disclosure.
FIG. 3 is a diagram of an example scenario under a proposed scheme in accordance with the present disclosure.
FIG. 4 is a diagram of an example scenario under a proposed scheme in accordance with the present disclosure.
FIG. 5 is a diagram of an example scenario under a proposed scheme in accordance with the present disclosure.
FIG. 6 is a diagram of an example scenario under a proposed scheme in accordance with the present disclosure.
FIG. 7 is a block diagram of an example communication system under a proposed scheme in accordance with the present disclosure.
FIG. 8 is a flowchart of an example process under a proposed scheme in accordance with the present disclosure.
FIG. 9 is a flowchart of a second example process under a proposed scheme in accordance with the present disclosure.

### DETAILED DESCRIPTION

Detailed implementations and implementations of the claimed subject matters are disclosed herein. However, it shall be understood that the disclosed implementations and implementations are merely illustrative of the claimed subject matters which may be embodied in various forms. The present disclosure may, however, be embodied in many different forms and should not be construed as limited to the exemplary implementations and implementations set forth herein. Rather, these exemplary implementations and implementations are provided so that the description of the present disclosure is thorough and complete and will fully convey the scope of the present disclosure to those skilled in the art. In the description below, details of well-known features and techniques may be omitted to avoid unnecessarily obscuring the presented implementations and implementations.

### Overview

Implementations in accordance with the present disclosure relate to various techniques, methods, schemes and/or solutions pertaining to wide bandwidth transmission with dynamic subchannel/subband operations in wireless communications. According to the present disclosure, a number of possible solutions may be implemented separately or jointly. That is, although these possible solutions may be described below separately, two or more of these possible solutions may be implemented in one combination or another. The various solutions and schemes implement the proposed schemes between APs and non-AP STAs. Accordingly, the various solutions and schemes proposed herein may address or otherwise alleviate the issues described above.

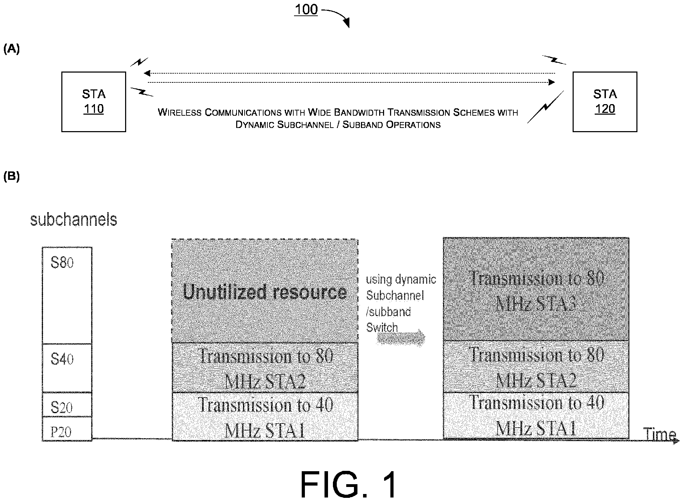

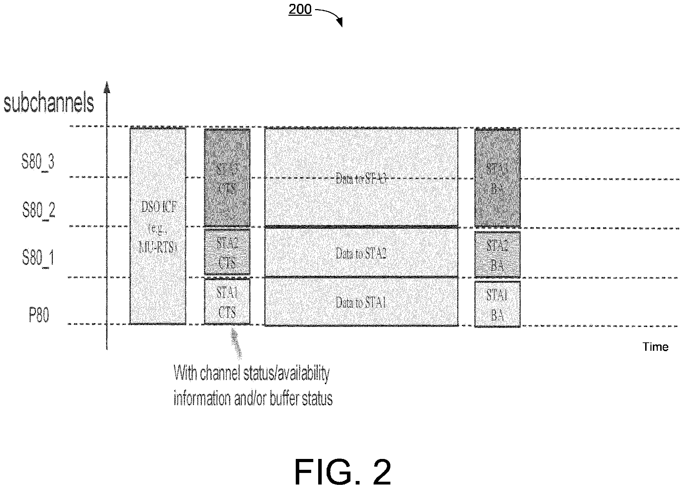

FIG. 1 illustrates an example network environment 100 in which various solutions and schemes in accordance with the present disclosure may be implemented. FIG. 2 - FIG. 9 illustrate examples of implementation of various proposed schemes in network environment 100 in accordance with the present disclosure. The following description of various proposed schemes is provided with reference to FIG. 1 - FIG. 9.

Referring to part (A) of FIG. 1, network environment 100 may involve at least a first STA (STA 110) communicating wirelessly with a second STA (STA 120). Either of STA 110 and STA 120 may function as an AP STA or, alternatively, a non-AP STA. In some cases, STA 110 and STA 120 may be associated with a basic service set (BSS) in accordance with one or more IEEE 802.11 standards (e.g., IEEE 802.11bn and future-developed standards). Each of STA 110 and STA 120 may be configured to communicate with each other by utilizing the wide bandwidth transmission schemes with dynamic subchannel/subband operations in accordance with various proposed schemes described below. For instance, as shown in part (B) of FIG. 1, unutilized resource(s) may be utilized with dynamic subchannel/subband switching by implementing one or more of the various proposed schemes in accordance with the present disclosure, thereby improving spectral efficiency and enhancing overall system performance. It is noteworthy that, while the various proposed schemes may be individually or separately described below, in actual implementations some or all of the proposed schemes may be utilized or otherwise implemented jointly. Of course, each of the proposed schemes may be utilized or otherwise implemented individually or separately.

FIG. 2 illustrates an example scenario 200 under a proposed scheme in accordance with the present disclosure. Under the proposed scheme, an AP (e.g., STA 110) may use an initial control frame (ICF) to trigger an associated non-AP STA (e.g., STA 120) that supports dynamic subchannel/subband operation (DSO) to switch to a specific DSO subband. Additionally, the AP may identify or otherwise determine whether or not the non-AP STA that is triggered to switch to the specific DSO subband has responded to the ICF. Correspondingly, the non-AP STA, which is triggered to switch to the specific DSO subband, may indicate its channel status/availability information and/or buffer status in a response frame (e.g., clear-to-send (CTS)) in responding to the ICF. Moreover, the AP may allocate one or more resources to the non-AP STA in subsequent data frame exchange(s) based on the channel status/availability information and/or buffer status received from the non-AP STA.

Under a proposed scheme in accordance with the present disclosure with respect to DSO pre-negotiation, a non-AP STA (e.g., STA 120) may indicate its capability of supporting DSO in a capability element transmitted to its associated AP (e.g., STA 110). The AP and the non-AP STA may negotiate/exchange one or more DSO parameters such as, for example and not limited to, a number of DSO anchor channel(s) (e.g., preamble detect channel(s)), one or more (preferred) locations of DSO anchor channel(s), priority of each DSO anchor channel, one or more (preferred) resource unit (RU) locations of the ICF response (e.g., upper or lower channels).

For instance, an AP may set up or otherwise establish a basic service set (BSS) of 320MHz operating bandwidth. The AP may have one candidate DSO anchor channel for a non-primary 160MHz DSO subband; three candidate DSO anchor channels for 80MHz DSO subbands (one for each non-primary 80MHz DSO subband); seven candidate DSO anchor channels for 40MHz DSO subbands (one for each non-primary 40MHz DSO subband); and fifteen candidate DSO anchor channels for 20MHz DSO subbands (one for each non-primary 20MHz DSO subband). In an event that an associated non-AP STA is capable of DSO with bandwidth of 80MHz, it may support a maximum of three candidate DSO anchor channels for non-primary 80MHz DSO subbands; a maximum of seven candidate DSO anchor channels for non-primary 40MHz DSO subbands; and/or a maximum of fifteen candidate DSO anchor channels for non-primary 20MHz DSO subbands. This non-AP STA may indicate to its associated AP a bitmap of its candidate DSO anchor channels corresponding to each DSO subband size. Additionally, the non-AP STA may also indicate its preferred ICF response frame RU location(s) (e.g., upper/lower 20MHz/40MHz channels within the DSO subband). Moreover, the non-AP STA may choose or otherwise select its candidate DSO anchor channels and DSO subband size based on one or more of the following factors: (i) its OBSS interference or in-device coexistence interference on the DSO subbands; and (ii) its DSO switching capability (e.g., a gap between DSO subbands and/or a maximum number of DSO subbands it supports).

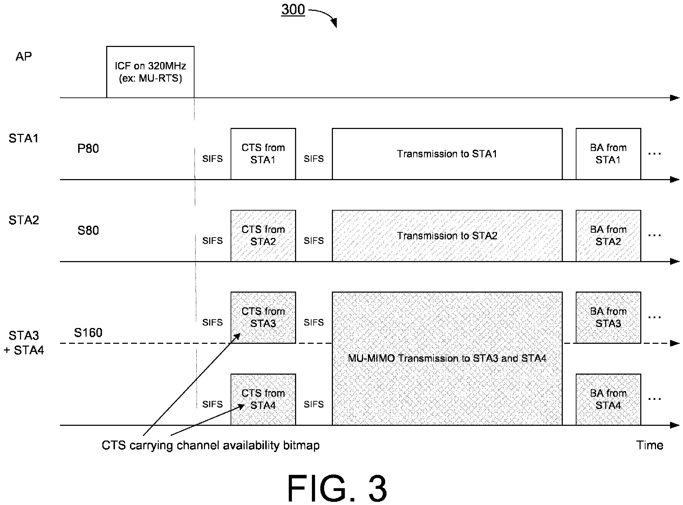

FIG. 3 illustrates an example scenario 300 under a proposed scheme in accordance with the present disclosure. Scenario 300 may pertain to DSO initial control frame exchange. Referring to FIG. 3, an AP (e.g., STA 110) may initiate a DSO by transmitting an initial control frame (ICF). For instance, the ICF may be a multi-user request-to-send (MU-RTS) frame with a DSO mode indication in the Common Info field of the MU-RTS. The ICF may be a control frame ( e.g., a trigger frame) with one or more User Info fields (e.g., DSO variant user info fields) to allocate specific DSO subband resources to the intended DSO STAs. The DSO subband resource allocated to each DSO STA may comprise a DSO subband and one or more resource units (RU) within the allocated DSO subband on which an ICF response frame of the DSO STA is to be transmitted. For example, the ICF may indicate the RUs within the allocated DSO subband for the intended DSO STAs to use to send a response frame in responding to the ICF (e.g., a CTS frame). Under the proposed scheme, each of the non-AP STAs, to which specific DSO subbands are allocated, may indicate its channel status/availability information and/or buffer status to the AP through an ICF response frame. In some implementations, the ICF response frame may carry a bitmap to indicate the availability of one or more 20MHz channels or a portion of a 20MHz channel within the allocated DSO subband for the respective non-AP STA. In an alternative embodiment, the ICF response frame carries a control field that indicates an availability of one or more 20MHz channels or a portion of a 20MHz channel within an allocated DSO subband allocated to the STA and/or a buffer status of the STA. Under the proposed scheme, the RU size (one or more RUs) on which the ICF response frame is transmitted is may be smaller than or equal to the maximum allocated resources for subsequent data transmissions with the non-AP STA.

For instance, referring to FIG. 3, an AP may transmit an ICF on a 320MHz bandwidth in non-high-throughput (non-HT) duplicate format. In this example, both STA1 and STA2 may be 80MHz devices while STA3 and STA4 may be 160MHz devices. AP may allocate a primary 80MHz (P80) subband to STA1, a secondary 80MHz (S80) DSO subband to STA2, and a secondary 160MHz (S160) DSO subband to STA3 and STA4. In response to receiving the ICF, each of STA1 and STA2 may transmit a respective ICF response frame on the P80 or S80, respectively. Similarly, each of STA3 and STA4 may transmit a respective ICF response frame on a lower 80MHz of the S160 and an upper 80MHz of the S160 as allocated, respectively. Moreover, the ICF response frame transmitted by each of STA3 and STA4 may carry channel availability information to indicate that S160 is available. Accordingly, the AP may perform a multi-user multiple-input-multiple-output (MU-MIMO) transmission to STA3 and STA4 on the S160.

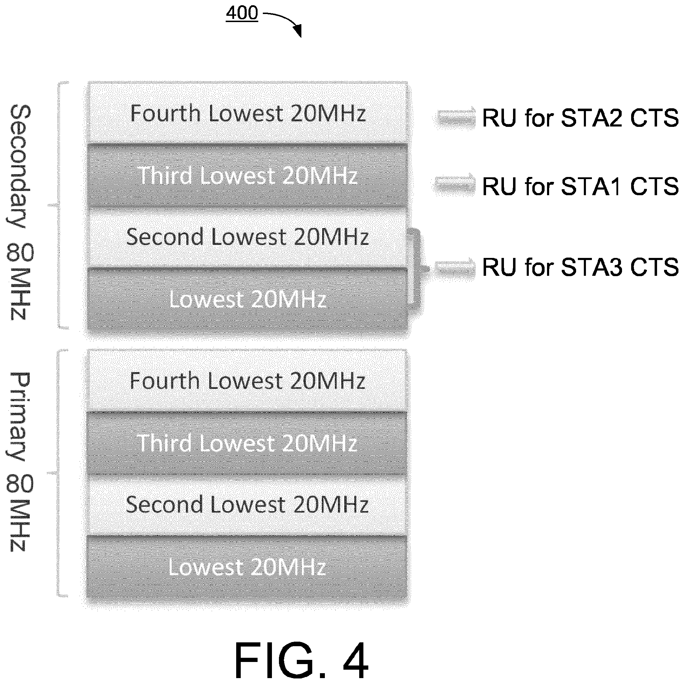

FIG. 4 illustrates an example scenario 400 under a proposed scheme in accordance with the present disclosure. Scenario 400 may pertain to a first scheme (Scheme 1) of ICF response frame resource allocation. Under the proposed scheme, an ICF frame may be a trigger frame (e.g., MU-RTS) with the DSO mode indication in a Common Info field of the MU-RTS frame. Correspondingly, the ICF Response frame may be a CTS control frame in a non-HT/non-HT duplicate PPDU format. Under the proposed scheme, a User Info field in the ICF frame MU-RTS (DSO) addressed to a DSO STA may be a DSO User Info field. The DSO User Info field may carry DSO subband allocation information to allocate a DSO subband to the DSO STA and resource unit (RU) allocation information to indicate one or more RUs within the allocated DSO subband on which an ICF response frame of the DSO STA is to be transmitted. For example, the DSO User Info field may carry a DSO subband subfield which includes DSO subband location/size information such as DSO Subband Index (e.g., a secondary 80MHz DSO subband may be assigned an Index of 2). The DSO User Info field may further carry a RU allocation subfield to indicate one or more 20MHz channels or a portion of a 20MHz channel within the DSO subband indicated by the DSO subband location/size information. Thus, a RU Allocation subfield along with the DSO Subband subfield in the DSO User Info field may indicate the 20 MHz channel(s) or a portion of a 20MHz channel for transmission of the ICF response frame (e.g., CTS frame) within the DSO subband. In some implementation, the bits of the DSO subband subfield and the RU Allocation subfield overlap with each other. For example, a first part of the RU Allocation subfield may be used as a part of the DSO subband subfield to allocate a DSO subband to a DSO STA, and a second part of the RU Allocation subfield may be used to indicate the one or more 20MHz channels or a portion of a 20MHz channel.

Under the proposed scheme, one or more DSO STAs may be allocated to the DSO subband overlapped with each other (e.g., STA 1 and STA2 being allocated to the same 80MHz DSO subband while STA3 being allocated to a 40MHz DSO subband overlapping with the lower 40MHz of the 80MHz DSO subband). Under the proposed scheme, Different DSO STAs should be allocated non-overlapped 20MHz channels for the ICF response frames. As an example, the RU Allocation subfield corresponding to STA3 may indicate the 40MHz RU in the 40MHz DSO Subband for STA3. Additionally, the RU Allocation subfield corresponding to STA1 may indicate a lower 20MHz RU of the secondary 40MHz in the 80MHz DSO Subband for STA1, and the RU Allocation subfield corresponding to STA2 may indicate an upper 20MHz RU of the secondary 40MHz in the 80MHz DSO Subband for STA2. As the DSO ICF Response frame, a Service field of the CTS frame may carry one or more of the following pieces of information: (i) DSO Subband bandwidth (e.g., 20MHz/40MHz/80MHz/160MHz), which may be 2-bit information; and (ii) channel availability bitmap. The size of the channel availability bitmap may depend on the DSO subband bandwidth. For instance, the bitmap size may be 0 bit for 20MHz DSO subband, 1 bit for 40MHz DSO subband, 3 bits for 80MHz DSO subband, or 7 bits for 160MHz DSO subband.

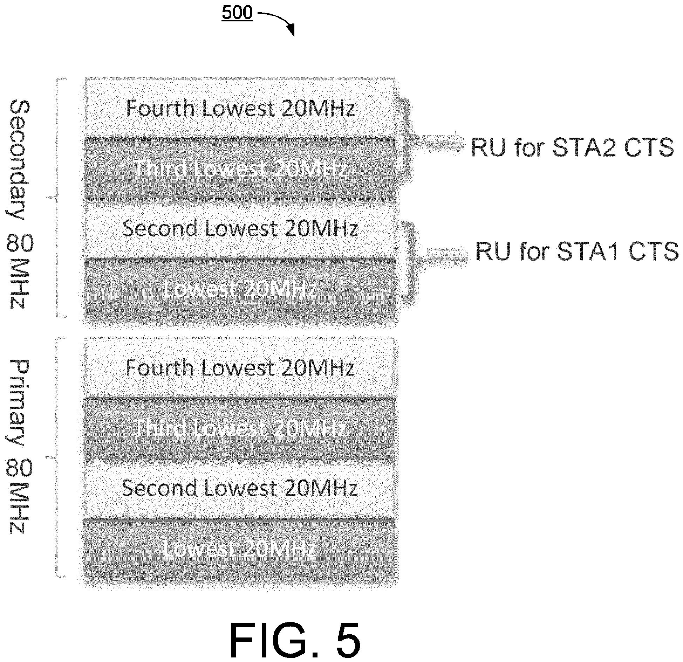

FIG. 5 illustrates an example scenario 500 under a proposed scheme in accordance with the present disclosure. Scenario 500 may pertain to a second scheme (Scheme 2) of ICF response frame resource allocation. Scheme 2 may utilize frames similar to the ICF and ICF response frame of Scheme 1. In scheme 2, the DSO User Info field addressed to a DSO STA may carry a DSO subband RU allocation information to allocate at least a portion of the DSO subband to the DSO STA and RU allocation information to indicate one or more RUs within the allocated portion of the DSO subband on which the ICF response frame of the DSO STA is to be transmitted. For example, The DSO User Info field may carry a DSO subband RU Allocation subfield which includes DSO subband location/size information and RU allocation within the DSO Subband, such as DSO Subband Index and RU Index (e.g., a secondary 80MHz DSO subband may be assigned an RU allocation within an Index of 2, RU 65 (indicates primary 40 MHz of the 80MHz DSO subband, which is a portion of the 80MHz DSO subband )). The DSO User Info field may carry a RU allocation subfield to further indicate one or more 20MHz channels or a portion of a 20MHz within the portion of the DSO subband (e.g., the primary 40MHz) indicated by the DSO subband location/size information and the RU allocation. Thus, the RU Allocation subfield along with the DSO Subband RU Allocation subfield in the DSO User Info field may indicate the 20 MHz channel(s) or a portion of a 20MHz for transmission of the ICF response frame (CTS frame) within the DSO subband. In the second scheme (Scheme 2), the ICF response (e.g., CTS frame) may not carry a channel availability bitmap explicitly. For instance, the CTS frame may only be transmitted if all the 20MHz channels indicated by the DSO subband RU allocation subfield are detected idle during a short interframe space (SIFS) interval between the ICF and ICF response frame. As an example, the DSO subband RU Allocation subfield may indicate a primary 40 MHz of the 80MHz DSO subband as potential resources for the DSO STA1 for the subsequent data transmission. The RU Allocation subfield corresponding to STA1 may indicate the lowest 20MHz and second lowest 20MHz RU in the 80MHz DSO Subband for STA1. The DSO subband RU Allocation subfield may indicate all 80 MHz of the 80MHz DSO subband as potential resources for the DSO STA2 for the subsequent data transmission. The RU Allocation subfield corresponding to STA2 may indicate the third lowest 20MHz and fourth lowest 20MHz RU in the 80MHz DSO Subband for STA2.For instance, STA1 may send its CTS on the lowest 20MHz and second lowest 20MHz RU SIFS after the ICF (That is, the CTS is sent after a SIFS after the ICF), only if STA1 detected SIFS idle on the primary 40 MHz of the 80MHz DSO subband. Likewise, STA2 may send its CTS on the third lowest 20MHz and fourth lowest 20MHz RU SIFS after the ICF (That is, the CTS is sent after a SIFS after the ICF), only if STA2 detected SIFS idle on all 80MHz DSO subband. Moreover, under the proposed scheme 2, different DSO STAs may be allocated non-overlapped 20MHz channels for the ICF response frame. In some implementation, the bits of the DSO subband RU Allocation subfield and the RU Allocation subfield overlap with each other. For example, a first part of the RU Allocation subfield may be used as a part of the DSO subband RU Allocation subfield to allocate a portion of a DSO subband to a DSO STA, and a second part of the RU Allocation subfield may be used to indicate the one or more 20MHz channels or a portion of a 20MHz channel within the portion of the DSO subband.

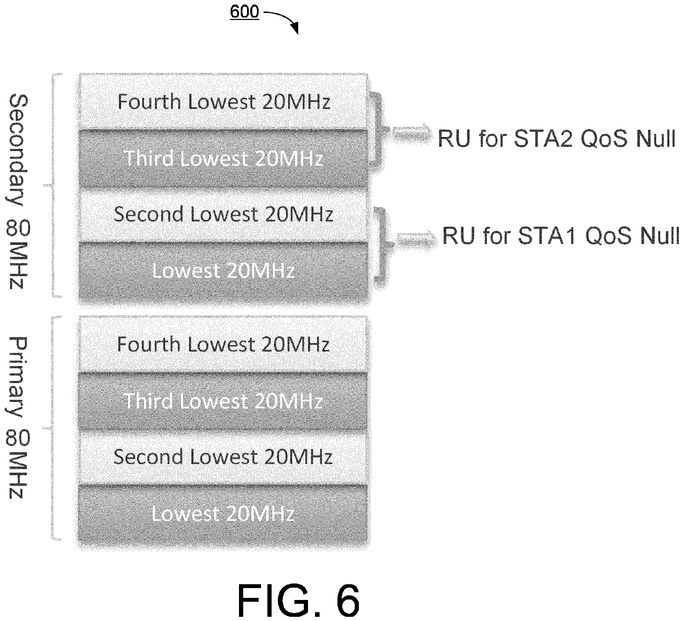

FIG. 6 illustrates an example scenario 600 under a proposed scheme in accordance with the present disclosure. Scenario 600 may pertain to a third scheme (Scheme 3) of ICF response frame resource allocation. Scheme 3 may have different ICF and ICF response frame from those of Scheme 1 and Scheme 2. In scheme 3, the ICF may be a buffer status report poll (BSRP) + bandwidth query report poll (BQRP) trigger frame, which may poll buffer status/channel availability information from DSO STAs. The BSRP +BQRP trigger frame is a BSRP trigger frame, and the User Info field in the BSRP trigger frame may include one bit to indicate whether or not a bandwidth query report is requested. The ICF Response frame may be a quality of service (QoS) Null frame with buffer status/channel availability information carried in the A-Control field of its medium access control (MAC) header. The QoS Null frame may be transmitted in a trigger-based physical-layer protocol data unit (PPDU) format. The A-Control field of the MAC header in the QoS Null frame ICF Response frame may include buffer status/channel availability information.

Under the proposed scheme, different DSO STAs may be allocated non-overlapped 20MHz channels for the ICF response frame. For instance, STA1 may send its QoS Null frame on the lowest 20MHz and second lowest 20MHz RU SIFS after the ICF (That is, the QoS Null frame is sent after a SIFS after the ICF), only if STA1 detected SIFS idle on the primary 40 MHz of the 80MHz DSO subband. Similarly, STA2 may send its QoS Null frame on the third lowest 20MHz and fourth lowest 20MHz RU SIFS after the ICF (That is, the QoS Null frame is sent after a SIFS after the ICF), only if STA2 detected SIFS idle on all 80MHz DSO subband.

### Illustrative Implementations

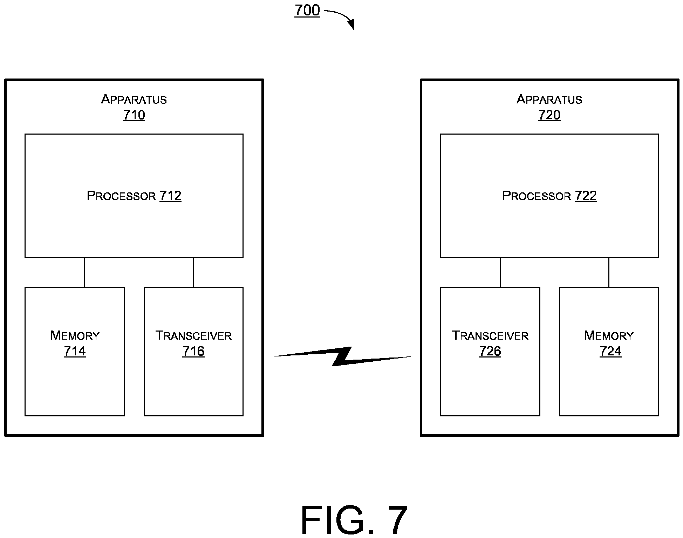

FIG. 7 illustrates an example system 700 having at least an example apparatus 710 and an example apparatus 720 in accordance with an implementation of the present disclosure. Each of apparatus 710 and apparatus 720 may perform various functions to implement schemes, techniques, processes, and methods described herein pertaining to wide bandwidth transmission with dynamic subchannel/subband operations in wireless communications, including the various schemes described above with respect to various proposed designs, concepts, schemes, systems and methods described above as well as processes described below. For instance, apparatus 710 may be implemented in an AP (e.g., STA 110) and apparatus 720 may be implemented in an associated non-AP STA (e.g., STA 120 as STA1, STA2, STA3 or STA4 in any of the above examples), or vice versa.

Each of apparatus 710 and apparatus 720 may be a part of an electronic apparatus, such as a portable or mobile apparatus, a wearable apparatus, a wireless communication apparatus or a computing apparatus. When implemented in a STA, each of apparatus 710 and apparatus 720 may be implemented in a smartphone, a smart watch, a personal digital assistant, a digital camera, or a computing equipment such as a tablet computer, a laptop computer or a notebook computer. Each of apparatus 710 and apparatus 720 may also be a part of a machine type apparatus, which may be an IoT apparatus such as an immobile or a stationary apparatus, a home apparatus, a wire communication apparatus or a computing apparatus. For instance, each of apparatus 710 and apparatus 720 may be implemented in a smart thermostat, a smart fridge, a smart door lock, a wireless speaker, or a home control center. When implemented in or as a network apparatus, apparatus 710 and/or apparatus 720 may be implemented in a network node, such as an AP in a WLAN or a mesh device.

In some implementations, each of apparatus 710 and apparatus 720 may be implemented in the form of one or more integrated-circuit (IC) chips such as, for example and without limitation, one or more single-core processors, one or more multi-core processors, one or more reduced-instruction set computing (RISC) processors, or one or more complex-instruction-set-computing (CISC) processors. In the various schemes described above, each of apparatus 710 and apparatus 720 may be implemented in or as a STA or an AP. Each of apparatus 710 and apparatus 720 may include at least some of those components shown in FIG. 7 such as a processor 712 and a processor 722, respectively, for example. Each of apparatus 710 and apparatus 720 may further include one or more other components not pertinent to the proposed scheme of the present disclosure (e.g., internal power supply, display device and/or user interface device), and, thus, such component(s) of apparatus 710 and apparatus 720 are neither shown in FIG. 7 nor described below in the interest of simplicity and brevity.

In one aspect, each of processor 712 and processor 722 may be implemented in the form of one or more single-core processors, one or more multi-core processors, one or more RISC processors or one or more CISC processors. That is, even though a singular term "a processor" is used herein to refer to processor 712 and processor 722, each of processor 712 and processor 722 may include multiple processors in some implementations and a single processor in other implementations in accordance with the present disclosure. In another aspect, each of processor 712 and processor 722 may be implemented in the form of hardware (and, optionally, firmware) with electronic components including, for example and without limitation, one or more transistors, one or more diodes, one or more capacitors, one or more resistors, one or more inductors, one or more memristors and/or one or more varactors that are configured and arranged to achieve specific purposes in accordance with the present disclosure. In other words, in at least some implementations, each of processor 712 and processor 722 is a special-purpose machine specifically designed, arranged and configured to perform specific tasks including those pertaining to wide bandwidth transmission with dynamic subchannel/subband operations in wireless communications in accordance with various implementations of the present disclosure.

In some implementations, apparatus 710 may also include a transceiver 716 coupled to processor 712. Transceiver 716 may include a transmitter capable of wirelessly transmitting and a receiver capable of wirelessly receiving data. In some implementations, apparatus 720 may also include a transceiver 726 coupled to processor 722. Transceiver 726 may include a transmitter capable of wirelessly transmitting and a receiver capable of wirelessly receiving data. It is noteworthy that, although transceiver 716 and transceiver 726 are illustrated as being external to and separate from processor 712 and processor 722, respectively, in some implementations, transceiver 716 may be an integral part of processor 712 as a system on chip (SoC) and/or transceiver 726 may be an integral part of processor 722 as a SoC.

In some implementations, apparatus 710 may further include a memory 714 coupled to processor 712 and capable of being accessed by processor 712 and storing data therein. In some implementations, apparatus 720 may further include a memory 724 coupled to processor 722 and capable of being accessed by processor 722 and storing data therein. Each of memory 714 and memory 724 may include a type of random-access memory (RAM) such as dynamic RAM (DRAM), static RAM (SRAM), thyristor RAM (T-RAM) and/or zero-capacitor RAM (Z-RAM). Alternatively, or additionally, each of memory 714 and memory 724 may include a type of read-only memory (ROM) such as mask ROM, programmable ROM (PROM), erasable programmable ROM (EPROM) and/or electrically erasable programmable ROM (EEPROM). Alternatively, or additionally, each of memory 714 and memory 724 may include a type of non-volatile random-access memory (NVRAM) such as flash memory, solid-state memory, ferroelectric RAM (FeRAM), magnetoresistive RAM (MRAM) and/or phase-change memory.

Each of apparatus 710 and apparatus 720 may be a communication entity capable of communicating with each other using various proposed schemes in accordance with the present disclosure. For illustrative purposes and without limitation, a description of the capabilities of apparatus 710 and apparatus 720, functioning as an AP and an associated non-AP STA, respectively, is provided below in the context of example processes 800 and 900. It is noteworthy that, although a detailed description of capabilities, functionalities and/or technical features of either of apparatus 710 and apparatus 720 is provided below, the same may be applied to the other of apparatus 710 and apparatus 720 although a detailed description thereof is not provided solely in the interest of brevity. It is also noteworthy that, although the example implementations described below are provided in the context of WLAN, the same may be implemented in other types of networks.

### Illustrative Processes

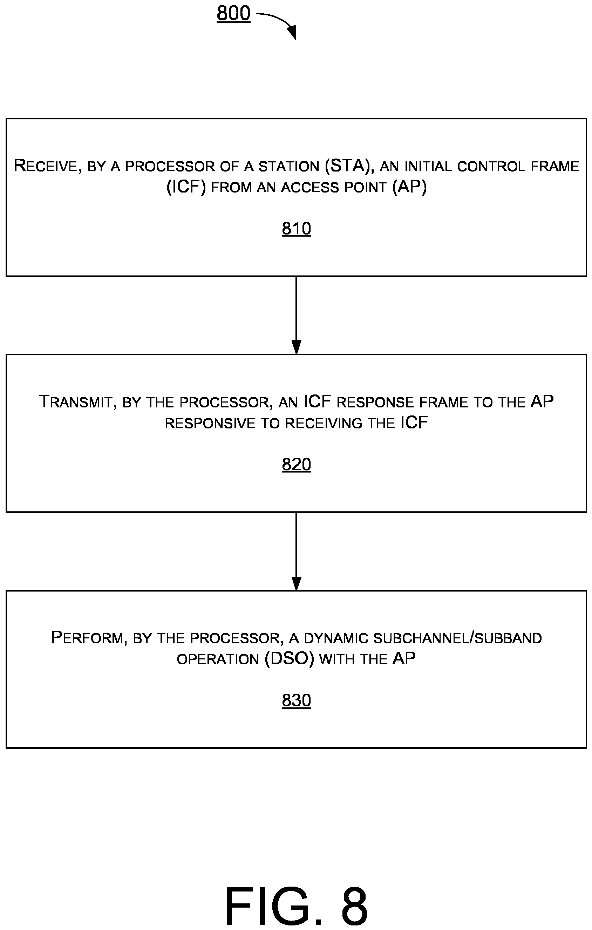

FIG. 8 illustrates an example process 800 in accordance with an implementation of the present disclosure. Process 800 may represent an aspect of implementing various proposed designs, concepts, schemes, systems, and methods described above. More specifically, process 800 may represent an aspect of the proposed concepts and schemes pertaining to wide bandwidth transmission with dynamic subchannel/subband operations in wireless communications. Process 800 may include one or more operations, actions, or functions as illustrated by one or more of blocks 810 and 820. Although illustrated as discrete blocks, various blocks of process 800 may be divided into additional blocks, combined into fewer blocks, or eliminated, depending on the desired implementation. Moreover, the blocks/sub-blocks of process 800 may be executed in the order shown in FIG. 8 or, alternatively, in a different order. Furthermore, one or more of the blocks/sub-blocks of process 800 may be executed repeatedly or iteratively. Process 800 may be implemented by or in apparatus 710 and apparatus 720 as well as any variations thereof. Solely for illustrative purposes and without limiting the scope, process 800 is described below in the context of apparatus 710 implemented in or as a non-AP STA and apparatus 720 implemented in or as an AP of a wireless network such as a WLAN in network environment 100 in accordance with one or more of IEEE 802.11 standards. Process 800 may begin at block 810.

At 810, process 800 may involve processor 712 of apparatus 710, as a STA, receiving, via transceiver 716, an ICF from an AP (e.g., apparatus 720). Wherein the ICF allocates dynamic subchannel/subband operation (DSO) subband resources to DSO STAs for transmitting ICF response frames. Process 800 may proceed from 810 to 820.

At 820, process 800 may involve processor 712 transmitting, via transceiver 716, an ICF response frame to the AP in response to receiving the ICF. Wherein the ICF response frame is transmitted according to a DSO subband resource allocated to the STA.

In some implementations, the ICF may include a control frame that indicates a DSO subband or a portion of the DSO subband in a User Info field addressed to one or more DSO STAs using at least a RU allocation indication or a DSO subband indication, or both.

In some implementations, the ICF comprises a trigger frame with one or more user info fields to allocate the DSO subband resources to the DSO STAs, wherein the DSO subband resource allocated to each DSO STA comprises a DSO subband and one or more resource units (RU) within the allocated DSO subband on which an ICF response frame of the DSO STA is to be transmitted.

In some implementations, the DSO subbands allocated to different DSO STAs overlap with each other and the one or more RUs within the DSO subbands allocated to different DSO STAs do not overlap with each other.

In some implementations, the ICF may carry a DSO mode indication, for example, the DSO mode indication may be carried in a Common Info field in the ICF that is common to all intended recipients.

In some implementations, the ICF may include a channel availability information and/or a buffer status information request to request a feedback of channel availability information and/or a buffer status information of the STA in the ICF response frame.

In some implementations, a DSO User Info field in the ICF may carry a DSO subband subfield and a RU allocation subfield that, together, indicate one or more 20MHz channels on which the ICF response frame is to be transmitted.

In some implementations, a DSO User Info field in the ICF may carry a DSO subband RU allocation subfield and a RU allocation subfield that, together, indicate a primary 40MHz channel of an 80MHz DSO subband on which the ICF response frame is to be transmitted.

In some implementations, a DSO User Info field in the ICF carries DSO subband allocation information to allocate a DSO subband to the STA and resource unit (RU) allocation information to indicate one or more RUs within the allocated DSO subband on which the ICF response frame is to be transmitted.

In some implementations, the RU allocation information indicates one or more 20MHz channels or a portion of a 20MHz within the DSO subband allocated by the DSO subband allocation information.

In some implementations, a DSO User Info field in the ICF carries a DSO subband RU allocation information to allocate at least a portion of the DSO subband to the STA and RU allocation information to indicate one or more RUs within the allocated portion of the DSO subband on which the ICF response frame is to be transmitted.

In some implementations, the RU allocation information indicates one or more 20MHz channels or a portion of a 20MHz channel within the portion of the DSO subband allocated by the DSO subband RU allocation information.

In some implementations, in transmitting of the ICF response frame, process 800 may involve processor 712 transmitting the ICF response frame responsive to all 20MHz channels indicated by a DSO subband RU allocation information being detected idle during a short interframe space (SIFS) interval between the ICF and the ICF response frame. In some implementations, in transmitting the ICF response frame, process 800 may involve processor 712 transmitting the ICF response frame responsive to the primary 40MHz channel of the 80MHz DSO subband being detected idle during a short interframe space (SIFS) interval between the ICF and the ICF response frame.

In some implementations, the ICF response frame may carry a bitmap that indicates an availability of one or more 20MHz channels or a portion of a 20MHz channel within an allocated DSO subband allocated to the STA.

In some implementations, the ICF response frame carries a control field that indicates an availability of one or more 20MHz channels or a portion of a 20MHz channel within an allocated DSO subband allocated to the STA and/or a buffer status of the STA.

In some implementations, the size of the one or more RUs on which the ICF response frame is transmitted may be smaller than or equal to a maximum allocated resources for a subsequent data transmission between the STA and the AP.

In some implementations, the ICF response frame includes a channel availability information and/or a buffer status information to indicate the AP to allocate resources to the STA in subsequent data frame exchange(s) based on the channel availability information and/or a buffer status information.

In some implementations, the ICF comprises a multi-user request-to-send (MU-RTS) frame or a buffer status report poll (BSRP) frame.

In some implementations, the ICF response frame comprises a clear-to-send (CTS) frame or a quality of service (QoS) Null frame.

In some implementations, process 800 may further involve processor 712 transmitting a capability element to the AP to indicate a capability of the STA in supporting the DSO.

In some implementations, process 800 may further involve processor 712 negotiating one or more DSO parameters with the AP. The one or more DSO parameters may include one or more of a number of DSO anchor channels, one or more locations of the DSO anchor channels, a priority of each of the DSO anchor channels, and one or more RU locations of the ICF response frame.

In some implementations, in negotiating the one or more DSO parameters, process 800 may involve processor 712 choosing one or more candidate DSO anchor channels and a DSO subband size by choosing one or more of the following: (1) an OBSS interference or an in-device coexistence interference on one or more DSO subbands; and (2) a DSO switching capability of the STA based on a gap between the one or more DSO subbands and a maximum number of the one or more DSO subbands the STA supports.

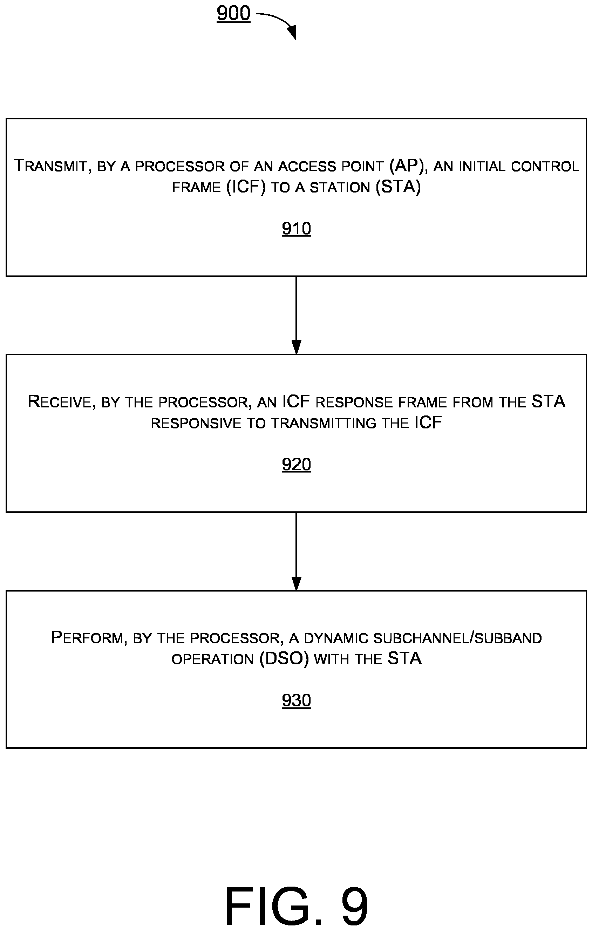

FIG. 9 illustrates an example process 900 in accordance with an implementation of the present disclosure. Process 900 may represent an aspect of implementing various proposed designs, concepts, schemes, systems, and methods described above. More specifically, process 900 may represent an aspect of the proposed concepts and schemes pertaining to wide bandwidth transmission with dynamic subchannel/subband operations in wireless communications. Process 900 may include one or more operations, actions, or functions as illustrated by one or more of blocks 910 and 920. Although illustrated as discrete blocks, various blocks of process 900 may be divided into additional blocks, combined into fewer blocks, or eliminated, depending on the desired implementation. Moreover, the blocks/sub-blocks of process 900 may be executed in the order shown in FIG. 9 or, alternatively, in a different order. Furthermore, one or more of the blocks/sub-blocks of process 900 may be executed repeatedly or iteratively. Process 900 may be implemented by or in apparatus 710 and apparatus 720 as well as any variations thereof. Solely for illustrative purposes and without limiting the scope, process 900 is described below in the context of apparatus 710 implemented in or as a non-AP STA and apparatus 720 implemented in or as an AP of a wireless network such as a WLAN in network environment 100 in accordance with one or more of IEEE 802.11 standards. Process 900 may begin at block 910.

At 910, process 900 may involve processor 722 of apparatus 720, as an AP, transmitting, via transceiver 726, an ICF to a STA (e.g., apparatus 710). Wherein the ICF allocates dynamic subchannel/subband operation (DSO) subband resources to DSO STAs for transmitting ICF response frames. Process 900 may proceed from 910 to 920.

At 920, process 900 may involve processor 722 receiving, via transceiver 726, an ICF response frame from the STA. Wherein the ICF response frame is transmitted according to a DSO subband resource allocated to the STA.

In some implementations, the ICF may include a control or trigger frame that indicates a DSO subband or a portion of the DSO subband in a User Info field addressed to one or more DSO STAs using at least a RU allocation indication or a DSO subband indication, or both.

In some implementations, the ICF comprises a trigger frame with one or more user info fields to allocate the DSO subband resources to the DSO STAs, wherein the DSO subband resource allocated to each DSO STA comprises a DSO subband and one or more resource units (RU) within the allocated DSO subband on which an ICF response frame of the DSO STA is to be transmitted.

In some implementations, the DSO subbands allocated to different DSO STAs overlap with each other and the one or more RUs within the DSO subbands allocated to different DSO STAs do not overlap with each other.

In some implementations, the ICF may carry a DSO mode indication, for example, the DSO mode indication may be carried in a Common Info field in the ICF that is common to all intended recipients.

In some implementations, the ICF may include a channel availability information and/or a buffer status information request to request a feedback of channel availability information and/or a buffer status information of the STA in the ICF response frame.

In some implementations, a DSO User Info field in the ICF may carry a DSO subband subfield and a RU allocation subfield that, together, indicate one or more 20MHz channels on which the ICF response frame is to be transmitted.

In some implementations, a DSO User Info field in the ICF may carry a DSO subband RU allocation subfield and a RU allocation subfield that, together, indicate a primary 40MHz channel of an 80MHz DSO subband on which the ICF response frame is to be transmitted.

In some implementations, a DSO User Info field in the ICF carries DSO subband allocation information to allocate a DSO subband to the STA and resource unit (RU) allocation information to indicate one or more RUs within the allocated DSO subband on which the ICF response frame is to be transmitted.

In some implementations, the RU allocation information indicates one or more 20MHz channels or a portion of a 20MHz within the DSO subband allocated by the DSO subband allocation information.

In some implementations, a DSO User Info field in the ICF carries a DSO subband RU allocation information to allocate at least a portion of the DSO subband to the STA and RU allocation information to indicate one or more RUs within the allocated portion of the DSO subband on which the ICF response frame is to be transmitted.

In some implementations, the RU allocation information indicates one or more 20MHz channels or a portion of a 20MHz channel within the portion of the DSO subband allocated by the DSO subband RU allocation information.

In some implementations, the ICF response frame may carry a bitmap that indicates an availability of one or more 20MHz channels or a portion of a 20MHz channel within an allocated DSO subband allocated to the STA.

In some implementations, the ICF response frame carries a control field that indicates an availability of one or more 20MHz channels or a portion of a 20MHz channel within an allocated DSO subband allocated to the STA and/or a buffer status of the STA.

In some implementations, the size of the one or more RUs on which the ICF response frame is transmitted may be smaller than or equal to a maximum allocated resources for a subsequent data transmission between the STA and the AP.

In some implementations, the ICF response frame includes a channel availability information and/or a buffer status information to indicate the AP to allocate resources to the STA in subsequent data frame exchange(s) based on the channel availability information and/or a buffer status information.

In some implementations, the ICF comprises a multi-user request-to-send (MU-RTS) frame or a buffer status report poll (BSRP) frame.

In some implementations, the ICF response frame comprises a clear-to-send (CTS) frame or a quality of service (QoS) Null frame.

In some implementations, process 900 may further involve processor 722 receiving a capability element from the STA which indicates a capability of the STA in supporting the DSO.

In some implementations, process 900 may further involve processor 722 negotiating one or more DSO parameters with the STA. The one or more DSO parameters may include one or more of a number of DSO anchor channels, one or more locations of the DSO anchor channels, a priority of each of the DSO anchor channels, and one or more RU locations of the ICF response frame.

### Additional Notes

The herein-described subject matter sometimes illustrates different components contained within, or connected with, different other components. It is to be understood that such depicted architectures are merely examples, and that in fact many other architectures can be implemented which achieve the same functionality. In a conceptual sense, any arrangement of components to achieve the same functionality is effectively "associated" such that the desired functionality is achieved. Hence, any two components herein combined to achieve a particular functionality can be seen as "associated with" each other such that the desired functionality is achieved, irrespective of architectures or intermedial components. Likewise, any two components so associated can also be viewed as being "operably connected", or "operably coupled", to each other to achieve the desired functionality, and any two components capable of being so associated can also be viewed as being "operably couplable", to each other to achieve the desired functionality. Specific examples of operably couplable include but are not limited to physically mateable and/or physically interacting components and/or wirelessly interactable and/or wirelessly interacting components and/or logically interacting and/or logically interactable components.

Further, with respect to the use of substantially any plural and/or singular terms herein, those having skill in the art can translate from the plural to the singular and/or from the singular to the plural as is appropriate to the context and/or application. The various singular/plural permutations may be expressly set forth herein for sake of clarity.

Moreover, it will be understood by those skilled in the art that, in general, terms used herein, and especially in the appended claims, e.g., bodies of the appended claims, are generally intended as "open" terms, e.g., the term "including" should be interpreted as "including but not limited to," the term "having" should be interpreted as "having at least," the term "includes" should be interpreted as "includes but is not limited to," etc. It will be further understood by those within the art that if a specific number of an introduced claim recitation is intended, such an intent will be explicitly recited in the claim, and in the absence of such recitation no such intent is present. For example, as an aid to understanding, the following appended claims may contain usage of the introductory phrases "at least one" and "one or more" to introduce claim recitations. However, the use of such phrases should not be construed to imply that the introduction of a claim recitation by the indefinite articles "a" or "an" limits any particular claim containing such introduced claim recitation to implementations containing only one such recitation, even when the same claim includes the introductory phrases "one or more" or "at least one" and indefinite articles such as "a" or "an," e.g., "a" and/or "an" should be interpreted to mean "at least one" or "one or more;" the same holds true for the use of definite articles used to introduce claim recitations. In addition, even if a specific number of an introduced claim recitation is explicitly recited, those skilled in the art will recognize that such recitation should be interpreted to mean at least the recited number, e.g., the bare recitation of "two recitations," without other modifiers, means at least two recitations, or two or more recitations. Furthermore, in those instances where a convention analogous to "at least one of A, B, and C, etc." is used, in general such a construction is intended in the sense one having skill in the art would understand the convention, e.g., "a system having at least one of A, B, and C" would include but not be limited to systems that have A alone, B alone, C alone, A and B together, A and C together, B and C together, and/or A, B, and C together, etc. In those instances where a convention analogous to "at least one of A, B, or C, etc." is used, in general such a construction is intended in the sense one having skill in the art would understand the convention, e.g., "a system having at least one of A, B, or C" would include but not be limited to systems that have A alone, B alone, C alone, A and B together, A and C together, B and C together, and/or A, B, and C together, etc. It will be further understood by those within the art that virtually any disjunctive word and/or phrase presenting two or more alternative terms, whether in the description, claims, or drawings, should be understood to contemplate the possibilities of including one of the terms, either of the terms, or both terms. For example, the phrase "A or B" will be understood to include the possibilities of "A" or "B" or "A and B."

From the foregoing, it will be appreciated that various implementations of the present disclosure have been described herein for purposes of illustration, and that various modifications may be made without departing from the scope of the present disclosure. Accordingly, the various implementations disclosed herein are not intended to be limiting, with the true scope being indicated by the following claims.

## Claims

1. A method, comprising:
receiving, by a processor of a station, in the following also referred to as STA, an initial control frame, in the following also referred to as ICF, from an access point, in the following also referred to as AP, wherein the ICF allocates dynamic subchannel/subband operation, in the following also referred to as DSO, subband resources to DSO STAs for transmitting ICF response frames (810);
transmitting, by the processor, an ICF response frame to the AP responsive to receiving the ICF, wherein the ICF response frame is transmitted according to a DSO subband resource allocated to the STA (820).

2. A method, comprising:
transmitting, by a processor of an access point, in the following also referred to as AP, an initial control frame, in the following also referred to as ICF, to a station, in the following also referred to as STA, wherein the ICF allocates dynamic subchannel/subband operation, in the following also referred to as DSO, subband resources to DSO STAs for transmitting ICF response frames (910); and
receiving, by the processor, an ICF response frame from the STA, wherein the ICF response frame is transmitted according to a DSO subband resource allocated to the STA (920).

3. The method of Claim 1 or 2, wherein the ICF comprises a trigger frame with one or more user info fields to allocate the DSO subband resources to the DSO STAs, wherein the DSO subband resource allocated to each DSO STA comprises a DSO subband and one or more resource units, in the following also referred to as RU, within the allocated DSO subband on which an ICF response frame of the DSO STA is to be transmitted.

4. The method of Claim 3, wherein the DSO subbands allocated to different DSO STAs overlap with each other and the one or more RUs within the DSO subbands allocated to different DSO STAs do not overlap with each other.

5. The method of any one of Claims 1 to 4, wherein the ICF carries a DSO mode indication.

6. The method of any one of Claims 1 to 5, wherein the ICF comprises a channel availability information and/or a buffer status information request to request a feedback of channel availability information and/or buffer status information of the STA in the ICF response frame.

7. The method of any one of Claims 1 to 6, wherein a DSO User Info field in the ICF carries DSO subband allocation information to allocate a DSO subband to the STA and RU allocation information to indicate one or more RUs within the allocated DSO subband on which the ICF response frame is to be transmitted.

8. The method of Claim 7, wherein the RU allocation information indicates one or more 20MHz channels or a portion of a 20MHz channel within the DSO subband allocated by the DSO subband allocation information.

9. The method of any one of Claims 1 to 8, wherein a DSO User Info field in the ICF carries DSO subband RU allocation information to allocate at least a portion of the DSO subband to the STA and RU allocation information to indicate one or more RUs within the allocated portion of the DSO subband on which the ICF response frame is to be transmitted.

10. The method of Claim 9, wherein the RU allocation information indicates one or more 20MHz channels or a portion of a 20MHz channel within the portion of the DSO subband allocated by the DSO subband RU allocation information.

11. The method of Claim 9 or 10, wherein the steps of transmitting of the ICF response frame comprises:
transmitting the ICF response frame responsive to all 20MHz channels indicated by the DSO subband RU allocation information being detected idle during a short interframe space, in the following also referred to as SIFS, interval between the ICF and the ICF response frame.

12. The method of any one of Claims 1 to 11, wherein the ICF response frame carries a bitmap that indicates an availability of one or more 20MHz channels or a portion of a 20MHz channel within a DSO subband allocated to the STA; or
the ICF response frame carries a control field that indicates an availability of one or more 20MHz channels or a portion of a 20MHz channel within a DSO subband allocated to the STA and/or a buffer status of the STA.

13. The method of Claim 3 or any one of Claims 4 to 12 being directly or indirectly dependent on Claim 3, wherein the size of the one or more RUs on which the ICF response frame is transmitted is smaller than or equal to a maximum allocated resources for a subsequent data transmission between the STA and the AP.

14. The method of any one of Claims 1 to 13, wherein the ICF response frame comprises a channel availability information and/or a buffer status information to indicate the AP to allocate resources to the STA in subsequent data frame exchange(s) based on the channel availability information and/or a buffer status information.

15. The method of any one of Claims 1 to 14, wherein the ICF comprises a multi-user request-to-send, in the following also referred to as MU-RTS, frame or a buffer status report poll, in the following also referred to as BSRP, frame: and/or
wherein the ICF response frame comprises a clear-to-send, in the following also referred to as CTS, frame or a quality of service, in the following also referred to as QoS, Null frame.
